(19) Europäisches Patentamt / European Patent Office / Office européen des brevets

(11) **EP 3 270 350 A1**

(12) **DEMANDE DE BREVET EUROPEEN**

(43) Date de publication:
**17.01.2018 Bulletin 2018/03**

(51) Int Cl.:
*G06Q 50/06* (2012.01)          *G06Q 10/04* (2012.01)

(21) Numéro de dépôt: **17180555.9**

(22) Date de dépôt: **10.07.2017**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **12.07.2016 EP 16305893**

(71) Demandeur: **Electricité de France
75008 Paris (FR)**

(72) Inventeurs:
• **BEEKER-ADDA, Nathanaël
75012 PARIS (FR)**
• **MALISANI, Paul
75018 PARIS (FR)**

(74) Mandataire: **Cabinet Plasseraud
66, rue de la Chaussée d'Antin
75440 Paris Cedex 09 (FR)**

(54) **ESTIMATION D'UNE CONSOMMATION FUTURE D'EAU CHAUDE SANITAIRE, NOTAMMENT POUR PILOTER L'ACTIVATION D'UN BALLON**

(57)    Un procédé d'estimation d'une consommation future d'eau chaude sanitaire délivrée par au moins un ballon d'eau chaude sanitaire (1) comprend :
- une détermination d'un historique des soutirages passés d'eau chaude sanitaire,
- une estimation d'une durée entre deux soutirages passés d'eau chaude sanitaire à partir d'un modèle de durée choisi, le modèle comprenant au moins un paramètre variable,
- la détermination du paramètre en fonction de l'historique, et
- une génération d'un scénario de soutirages futurs d'eau chaude sanitaire sur une période future, à partir d'une détermination du paramètre variable du modèle choisi.

FIG. 1

**Description**

L'invention concerne le domaine de la fourniture d'eau chaude sanitaire.

Plus précisément, l'invention concerne notamment un procédé d'estimation d'une consommation future d'eau chaude sanitaire délivrée par au moins un ballon d'eau chaude, dans au moins un foyer, notamment en vue d'optimiser l'activation future du ballon.

Actuellement, l'évolution du mix de production, qui fait la part belle aux Energies Renouvelables (production photovoltaïque de panneaux solaires, production d'éoliennes, etc.), entraîne un besoin accru en flexibilités des parcs de chauffe-eau joule à accumulation, résidentiel, plus précisément les ballons d'eau chaude sanitaire.

Avec plusieurs millions d'unités installées en France dont plus de 80% sont asservis au signal tarifaire Heures Pleines/ Heures creuses (HP/HC), le parc de Chauffe-Eau Joule (CEJ) à accumulation résidentiel - utilisé aujourd'hui pour le lissage journalier de la courbe de charge (consommation électrique par pas réguliers de temps sur une période donnée)- est susceptible de répondre à ces enjeux.

Une double problématique de l'estimation et du contrôle des CEJ se pose : un contrôle plus poussé du ballon permet une optimisation de la consommation électrique, ou une adaptation par rapport à la variabilité des productions à la maille locale pour satisfaire des contraintes dues au réseau. Une bonne estimation du profil de température de l'eau à l'intérieur d'un ballon est nécessaire pour garantir qu'un planning prévisionnel (prévision) de chauffe n'entrera pas en conflit avec le confort de l'utilisateur.

En effet, les utilisateurs effectuent généralement des soutirages d'eau chaude sanitaire à des heures variables de la journée. Pour le confort de l'utilisateur, il doit être possible de garantir une distribution d'eau chaude sanitaire à tout moment.

Pour garantir une telle distribution d'eau chaude sanitaire, une bonne estimation de la consommation future d'eau chaude sanitaire des foyers possédant un ballon est utile. La connaissance du soutirage est souvent résumée en une moyenne de consommation heure par heure pour le foyer, ou pour un ensemble de foyers.

Toutefois, la connaissance du soutirage heure par heure ne permet pas d'évaluer des scénarii de soutirage sur le long terme. Des soutirages d'eau froide ne peuvent donc pas être évités sur une période d'une journée complète, voire même plus longtemps.

La présente invention vient améliorer la situation.

A cet effet, elle propose un procédé d'estimation d'une consommation future d'eau chaude sanitaire délivrée par au moins un ballon d'eau chaude comprenant :

- une détermination d'un historique des soutirages passés d'eau chaude sanitaire comprenant :

   ◦ un nombre de soutirages passés d'eau chaude sanitaire durant une période passée,
   ◦ une consommation totale d'eau chaude sanitaire durant ladite période passée,
   ◦ une répartition des soutirages passés d'eau chaude sanitaires sur ladite période passée,

- une estimation d'une durée entre deux soutirages passés d'eau chaude sanitaire à partir d'un modèle de durée choisi, ledit modèle comprenant au moins un paramètre variable,
- la détermination dudit paramètre en fonction de l'historique et
- une génération d'un scénario de soutirages futurs d'eau chaude sanitaire sur une période future, à partir d'une détermination dudit paramètre variable du modèle choisi.

Grace à ces dispositions, il est possible de prévoir au mieux les consommations d'eau chaude sanitaire d'un ou plusieurs foyers pour améliorer leur confort en évitant des soutirages d'eau froide. Le procédé selon l'invention permet en outre de générer des scénarii de consommation d'eau chaude sur une période relativement longue, au moins une journée complète de 24 heures. On entend par « scénario de soutirages » une anticipation des soutirages futurs.

Selon une réalisation, la consommation totale d'eau chaude sanitaire comprend l'estimation d'une amplitude pour au moins un soutirage passé d'eau chaude sanitaire.

Selon une réalisation, l'amplitude comprend une quantité d'énergie pour chaque soutirage passé d'eau chaude sanitaire.

En alternative, l'amplitude peut être un volume d'eau chaude soutirée.

Selon une réalisation, le procédé comprend pour chaque soutirage passé:

- au moins une mesure par un capteur de débit d'eau consommée, en sortie du ballon d'eau chaude,
- au moins une mesure, par un dispositif de contrôle de puissance, d'une puissance électrique injectée dans ledit ballon d'eau chaude,
- une détermination, à partir du débit d'eau consommée durant le soutirage passé et de la puissance électrique injectée, d'au moins un profil de température interne du ballon à partir duquel la quantité d'énergie du soutirage passé est déterminée

Cette réalisation est particulièrement avantageuse puisqu'elle permet de déterminer le profil de température interne du ballon de manière non-intrusive.

Selon une réalisation, la consommation totale d'eau chaude sanitaire est déterminée à partir d'un modèle stochastique.

Les heures d'occurrence des soutirages d'eau chaude sanitaire ne sont pas déterminées à l'avance. L'utilisation d'un modèle stochastique permet donc de générer des scénarii de soutirages probables d'eau chaude, et notamment d'anticiper des soutirages futurs d'eau chaude sanitaire dans un futur proche.

Selon une réalisation, le scénario comprend l'indication d'une future occurrence d'un soutirage futur d'eau chaude sanitaire, ledit soutirage futur étant au moins caractérisé par une amplitude.

La caractérisation du soutirage futur par son amplitude peut notamment être utile pour estimer la quantité d'eau chaude sanitaire à fournir dans un futur proche, et donc d'ajuster le degré de chauffe du ballon en conséquence afin d'éviter un soutirage futur d'eau froide.

Selon une réalisation, le modèle de durée est un modèle autorégressif conditionnel de Weibull.

Le modèle autorégressif conditionnel de Weibull est caractérisé par plusieurs paramètres, notamment un paramètre d'échelle et un paramètre de forme. L'estimation de ces paramètres particuliers va permettre de pouvoir générer les scénarii futurs de consommation d'eau chaude.

En variante on peut utiliser d'autres modèles de durée, typiquement un autre modèle autorégressif conditionnel, exponentiel par exemple, ou encore un processus de Hawkes ou un processus de Poisson inhomogène.

Chacun de ces modèles et processus et caractérisé par des paramètres. L'estimation de ces paramètres en fonction de l'historique de soutirages passés sur la période passé permet de générer les scénarii de consommation future d'eau chaude sanitaire.

L'invention vise aussi un dispositif d'estimation d'une consommation future d'eau chaude sanitaire délivrée par au moins un ballon d'eau chaude, le dispositif comportant un circuit de traitement configuré pour la mise en oeuvre du procédé selon l'invention.

Selon une réalisation, le dispositif comprend au moins un capteur de débit en sortie du ballon d'eau chaude, ledit capteur étant relié à un module de contrôle.

Ce dispositif est particulièrement avantageux car il est non-intrusif. Il peut donc par exemple être installé sur un ballon d'eau chaude existant, sans nécessiter d'arrangements préalables.

Selon une réalisation, le dispositif comprend une interface de connexion apte à transmettre le scénario de soutirages futurs d'eau chaude sanitaire.

Le scénario peut notamment être utilisé à des fins d'optimisation, par exemple pour une relance de chauffe du ballon si le scénario prévoit des fortes consommations futures.

Selon une réalisation, le dispositif comprend un module de contrôle de puissance, ledit module de contrôle de puissance étant apte à commander l'injection de puissance électrique en fonction du scénario de soutirages futurs d'eau chaude sanitaire.

La présente invention vise aussi un ballon d'eau chaude sanitaire comprenant un dispositif selon l'invention.

La présente invention vise aussi un programme informatique caractérisé en ce qu'il comporte des instructions pour la mise en oeuvre du procédé selon l'invention, lorsque ce programme est exécuté par un processeur.

D'autres avantages et caractéristiques de l'invention apparaîtront à la lecture de la description détaillée d'exemples de réalisation ci-après et à l'examen des dessins annexés sur lesquels :

la figure 1 représente un ballon d'eau chaude comprenant un dispositif d'estimation d'une consommation future d'eau chaude sanitaire au sens de l'invention,

la figure 2 illustre un exemple de la répartition des soutirages sur une période de 24h,

la figure 3 illustre la distribution des amplitudes des soutirages, mettant en évidence quatre pics,

la figure 4 illustre un exemple d'une moyenne cumulative du nombre de soutirages sur une période de 48h,

la figure 5 est un graphique de comparaison de la distribution de Weibull et de la distribution obtenue de manière expérimentale,

la figure 6 illustre les principales étapes du procédé d'estimation d'une consommation future d'eau chaude sanitaire délivrée par un ballon d'eau chaude selon l'invention.

Ci-après un exposé détaillé de plusieurs modes de réalisation de l'invention assorti d'exemples et de référence aux dessins.

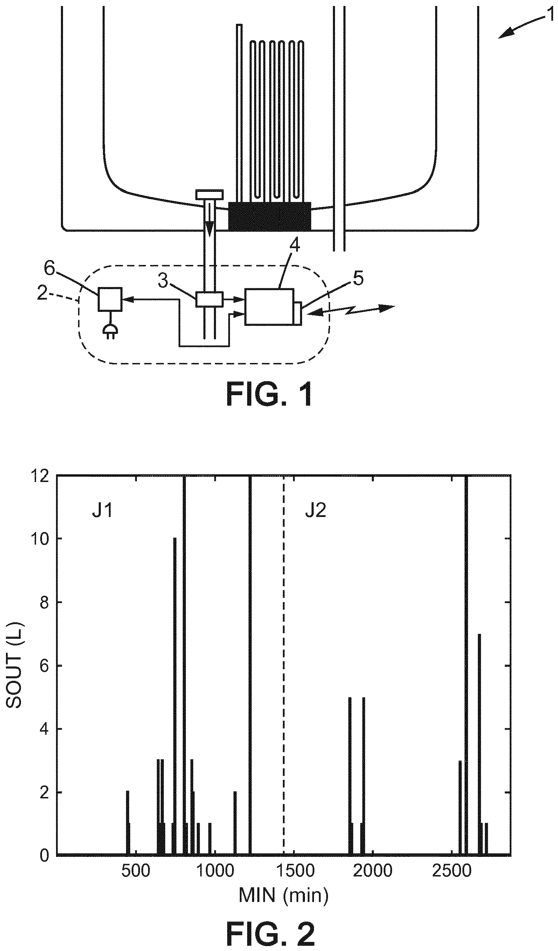

La figure 1 illustre un chauffe-eau, de type ballon d'eau chaude sanitaire 1 comprenant un réservoir. La taille du réservoir peut varier en fonction des besoins du foyer. Le réservoir est généralement rempli d'eau, qui arrive froide. L'eau est ensuite chauffée au moyen d'une source d'énergie. Typiquement, la source d'énergie peut être de l'électricité, du gaz ou encore une pompe à chaleur.

Dans la suite de la description, et à titre d'exemple, on considère que le ballon d'eau chaude est électrique.

Le ballon d'eau chaude sanitaire 1, ou ballon d'eau chaude 1, ou ballon 1, est par exemple équipé d'un dispositif 2 comprenant au moins un capteur de débit 3, un module de contrôle 4, une interface de connexion 5 et un module de contrôle de puissance 6.

Le capteur de débit 3 peut être placé en entrée ou en sortie du ballon d'eau chaude 1. Sur l'exemple illustré figure 1, le capteur de débit 3 est placé en sortie du ballon 1, de sorte qu'il mesure le débit d'eau chaude sanitaire sortant du ballon 1.

Le capteur de débit 3 permet d'effectuer des mesures, envoyées au module de contrôle 4 servant entre autre à la génération de scénarii de soutirages futurs d'eau chaude sanitaire à partir de mesure de soutirages passés, tels que décrit en détail dans la suite de la description. Le module de contrôle 4 peut par exemple être accolé au ballon d'eau chaude 1. En alternative, le module de contrôle 4 peut être situé hors du foyer.

Cela peut notamment être le cas lorsque des scénarii sont générés pour plusieurs ballons d'eau chaude 1 d'un même foyer, ou pour plusieurs ballons d'eau chaude 1 de plusieurs foyers.

Dans la suite de la description, on décrit un dispositif et un procédé d'estimation d'une consommation future d'eau chaude sanitaire pour un unique ballon d'eau chaude 1, bien que le dispositif et le procédé soient applicables à plusieurs ballons 1 situés dans un même ou dans différents foyers.

Le ballon d'eau chaude 1 peut être apte à transmettre les scenarii générés au moyen de l'interface de connexion 5. L'interface de connexion 5 est par exemple de type câble Ethernet, Wifi, ou toute autre interface de communication.

L'interface de connexion 5 peut par exemple transmettre les scénarii à l'extérieur pour une optimisation future du système. Il est également possible de transmettre les scénarii localement, par exemple pour effectuer une relance de chauffe du ballon d'eau chaude 1 en cas de prévision de fortes consommations futures.

On prévoit donc un module de contrôle de puissance 6, par exemple raccordé au ballon, plus précisément raccordé à la source d'énergie du ballon. Le module de contrôle de puissance 6 est par exemple apte à commander l'injection de puissance électrique dans le ballon 1, ou à commander l'arrêt de l'injection de puissance électrique.

L'activation et la désactivation de l'injection de la puissance électrique dépendent par exemple des scénarii générés par le dispositif 2.

Le dispositif 2 permet par exemple de générer un scénario de soutirages futurs d'eau chaude sanitaire sur une période future.

Généralement, la consommation d'eau chaude d'un foyer est estimée en moyenne heure par heure sur un grand nombre de jours. Afin de permettre d'estimer la consommation sur de plus longues périodes, par exemple jour par jour, on modélise par exemple la consommation à l'aide d'un modèle de durée.

Ce module de durée permet par exemple d'estimer l'amplitude de chaque soutirage ainsi que la durée entre deux soutirages successifs. En effet, les soutirages d'eau chaude interviennent pour différents usages tels que la cuisine, la vaisselle, les bains, etc. Tous ces usages ne nécessitent pas la même quantité d'eau chaude, n'ont pas la même durée dans le temps et interviennent de manière plutôt aléatoire au cours de la journée, sauf exception.

A titre d'exemple, le diagramme de la figure 2 illustre une répartition du nombre de litres L soutirés à chaque soutirage SOUT d'eau chaude sur 48 heures (h) minute par minute MIN. Il apparaît clairement sur ce diagramme que le nombre de soutirages, le nombre de litres soutirés et leur répartition sont bien différents entre les premières 24 heures J1 et les deuxièmes 24 heures J2.

Ainsi, les soutirages d'eau chaude sanitaire, ou soutirages d'eau chaude, ou soutirage, peuvent être caractérisés par leur amplitude.

L'amplitude d'un soutirage correspond par exemple à la quantité d'eau soutirée durant le soutirage, c'est-à-dire le volume d'eau soutiré, par exemple exprimé en litre. En variante, l'amplitude correspond à la quantité d'énergie soutirée pour un soutirage.

La consommation d'eau chaude sanitaire peut quant à elle être définie par le nombre de soutirages effectués sur une période et la durée successive entre chaque soutirage. Les soutirages sont bien entendu toujours caractérisés par leur amplitude.

Afin de déterminer une consommation d'eau chaude sanitaire future, on détermine au préalable un historique des soutirages passés d'eau chaude sanitaire sur une période passée. Par exemple, la période passée peut être de plusieurs heures, typiquement au moins 24 heures.

Durant la période passée, on mesure au moins l'amplitude de chaque soutirage, leur répartition dans le temps, et/ou leur heure d'occurrence, ainsi que la durée entre deux soutirages successifs.

Cela sert notamment à définir un modèle stochastique de consommation d'eau chaude sanitaire DHWC(t) à un instant t. Le modèle est défini comme suit :

$$DHWC(t) = \sum_{j=1}^{+\infty} M_j \theta(t - t_j)$$

Où $t_j$ et $M_j$ correspondent respectivement à une heure d'occurrence et à l'amplitude du soutirage j. $\theta(t)$ est la fonction Heaviside telle que $\theta(t) = 0$ si $t<0$ et $\theta(t) = 1$ si $t> 0$. Ce modèle va servir à générer des scénarii de consommation d'eau chaude sanitaire future, à partir des soutirages passés.

Si l'amplitude M d'un soutirage correspond au nombre de litres consommés durant le soutirage, on mesure l'amplitude directement à l'aide du capteur de débit 3.

Si l'on souhaite estimer l'amplitude en tant que quantité d'énergie pour un soutirage, on peut tout d'abord mesurer le débit d'eau soutirée à l'aide du capteur de débit 3 pour le soutirage. On mesure ensuite la puissance électrique injectée dans le ballon au moyen du module de contrôle de puissance 6. Puis, à partir de ces deux mesures, on peut déterminer, à l'aide du module de contrôle 4, une donnée de sortie.

Typiquement, la donnée de sortie peut être un profil de température interne du ballon 1. Ce profil de température va permettre de pouvoir calculer la différence de température à l'intérieur du ballon entre la température avant soutirage et la température après soutirage. La quantité d'énergie soutirée peut ainsi être déterminée. Avantageusement, cela permet de mesurer l'amplitude du soutirage sans avoir recours à un dispositif intrusif. Le dispositif de la présente invention peut être installé sur tout ballon d'eau chaude existant, sans nécessiter de travaux coûteux.

Comme décrit en référence à la figure 2, les amplitudes peuvent fortement varier d'un soutirage à l'autre. Afin de déterminer l'amplitude de soutirages futurs, on définit un modèle représentant une distribution de différents types de soutirages passés sur la période passée. Les types de soutirages en général comprennent par exemple des faibles, des moyens et d'importants soutirages, caractérisés respectivement par une faible, une moyenne et une importante amplitude.

Dans le modèle prédéfini, les soutirages passés et futurs sont représentés comme des variables aléatoires gouvernées par une même loi de probabilité. Les soutirages sont positifs, ce qui signifie que leur fonction de densité peut être représentée sur un intervalle $[0, + \infty]$.

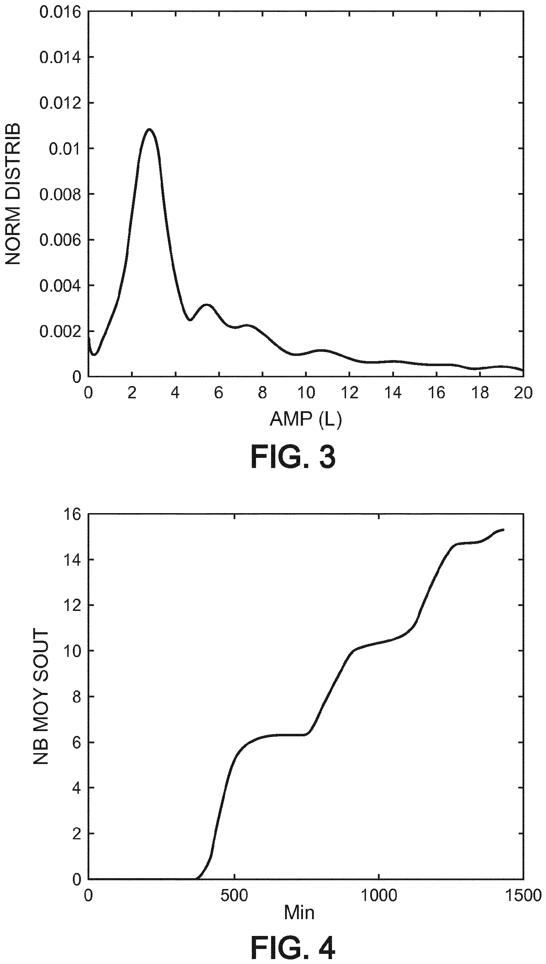

La distribution de probabilité des soutirages passés est représentée sur la figure 3. En abscisses est représentée l'amplitude des soutirages passés en litres et en ordonnées est représentée la distribution de probabilité des amplitudes des soutirages passés. Ce graphique résulte de données expérimentales issues du modèle décrit.

Cette distribution résulte des amplitudes des soutirages passés mesurées durant la période passée. Cette distribution peut être directement estimée par le module de contrôle 4 du dispositif 2, en fonction des mesures effectuées par le capteur de débit 3 et/ou le dispositif de contrôle de puissance 6.

Afin de déterminer le nombre de soutirages passés effectués sur la période passée, et éventuellement l'heure d'occurrence de chaque soutirage passé, on définit un modèle quotidien en considérant simplement la valeur moyenne du nombre de soutirages passés à une heure donnée pour le foyer. Le modèle quotidien est définit comme suit :

$$N_k(t) = \sum_{j=1}^{m} \theta(t - t_j^k).$$

La fonction $N_k(t)$ représente le nombre de soutirages passés effectués sur la période passée sur l'intervalle $[0, t]$, pour t par exemple compris dans l'intervalle $[0, 24h]$, avec k représentant le nombre de mesures effectuées sur une période passée.

Puis, on estime la valeur moyenne du nombre de soutirages passés à une heure donnée au moyen de la fonction moyenne M(t) :

$$M(t) = \frac{1}{n} \sum_{k=1}^{n} N_k(t).$$

Ainsi, à chaque instant t, il est possible de déterminer en moyenne combien de soutirages futurs peuvent avoir lieu. Cette moyenne est basée sur les mesures du nombre de soutirages passés effectuées à cette heure précise durant la période passée. Ces mesures sont par exemple effectuées par le capteur de débit 3 et le module de contrôle 4.

La figure 4 illustre une répartition de la valeur moyenne du nombre de soutirages passés réparti sur deux jours. Les portions plates de la courbe correspondent à des périodes durant lesquelles il y a en moyenne peu de soutirages, au contraire des portions plus pentues qui correspondent à des périodes durant lesquelles il y a en moyenne un nombre plus important de soutirages. Ce graphique illustre des données expérimentales issues du modèle décrit.

Les données correspondant au nombre, à la répartition et à l'amplitude des soutirages passés sont ensuite conservées et déterminent l'historique des soutirages passés sur la période passée.

A partir du nombre de soutirages $N_k(t)$, il est par exemple possible de construire des incréments au moyen de la fonction moyenne $M(t)$.

Pour chaque période passée de mesure k, on injecte chaque heure d'occurrence de soutirage $t_1^k$ à $t_m^k$ dans la fonction moyenne $M(t)$. La fonction moyenne $M(t_i^k)$ est ensuite utilisée pour créer les incréments, et donc déterminer un incrément moyen entre deux soutirages successifs. Les incréments correspondent à une incrémentation d'un nombre de soutirage entre deux heures successives.

$$v_i^k = M(t_i^k) - M(t_{i-1}^k).$$

Avec $v_i^k$ étant l'incrément moyen du nombre de soutirages passés entre les instants $t_i^k$ et $t_{i-1}^k$. On peut s'attendre à ce que la valeur de $v_i^k$ pour tout k soit égale à 1. Les incréments sont par exemple représentatifs de la corrélation entre deux soutirages successifs.

Les incréments sont distribués dans l'intervalle $[0 ; +\infty]$. En utilisant les données expérimentales recueillies à partir de la fonction définie ci-avant pour un foyer donné, il est possible d'obtenir la fonction de répartition des incréments $v_i^k$.

Il a été déterminé que la fonction de répartition ainsi obtenue peut être associée à la fonction de répartition de Weibull :

$$h(v) = 1 - \exp(v^\delta / \kappa)$$

Avec $\delta$ le paramètre de forme et k le paramètre d'échelle.

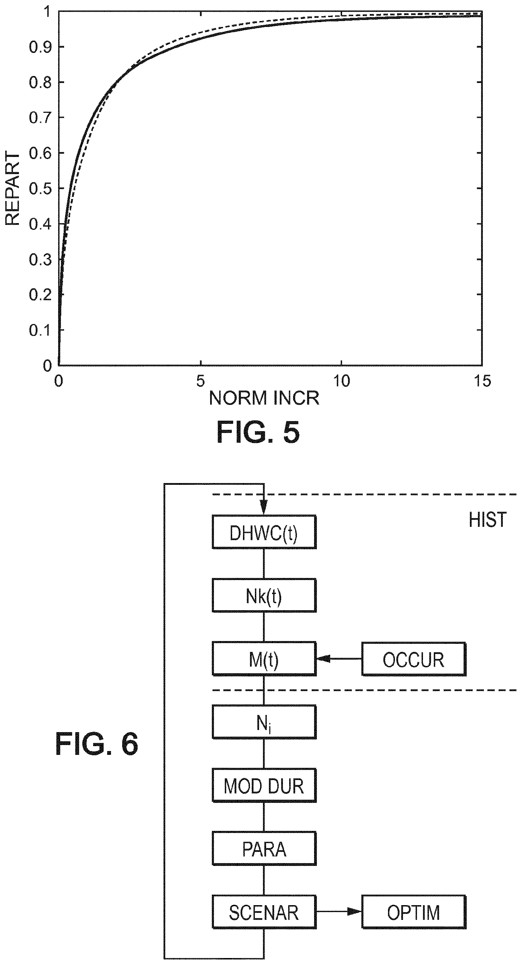

Sur la figure 5, la courbe illustrant la fonction de répartition obtenue à partir des données expérimentales est représentée en pointillées. La courbe illustrant la fonction de répartition de Weibull est représentée en traits pleins.

Généralement, la distribution de Weibull est associée avec un modèle autorégressif conditionnel (ou « Autoregressive Conditional Duration model » ou « ACD »).

Le modèle ACD est basé sur une structure autorégressive de la durée conditionnelle d'une durée entre deux évènements, ici entre deux soutirages successifs. On génère par exemple une séquence de n durées selon une loi autorégressive dépendant de la durée précédente. Le nombre de durées i, représenté par la variable stochastique $v_i$ est donné par l'équation :

$$v_i = \psi_i \epsilon_i,$$

dans laquelle les $\epsilon_i$ sont des variables aléatoires indépendantes et distribuées de manière identique selon une loi de probabilité donnée, avec une valeur moyenne égale à 1, et

$$\psi_i = \mathbb{E}[v_i | \mathbf{F}_{i-1}]$$

est la durée moyenne dépendant de l'information disponible après le dernier évènement, ou soutirage passé, représenté par le filtre $\mathbf{F}_{i-1}$. Le filtre est notamment utilisé pour représenter l'augmentation du nombre de données disponibles après chaque soutirage passé.

Le modèle ACD linéaire est donné par l'équation :

$$\psi_i = \omega_0 + \omega_1 v_{i-1} + \omega_2 \psi_{i-1}$$

Pour $\omega_0 > 0$, $\omega_1$, $\omega_2 \geq 0$.

Les variables $\epsilon_i$ peuvent suivre plusieurs lois de probabilités différentes. Par exemple, on peut choisir une modèle ACD exponentiel, ou encore un modèle ACD de Weibull.

Les modèles ACD peuvent être définis en étendant le caractère autorégressif à un ordre p pour les incréments

$v_i$ et à un ordre q pour les variables $\in_i$. Dans le cas présent, et pour un foyer donné, on peut se limiter à un ordre 1 pour p et q, tel que (p, q) = (1, 1).

Les paramètres $\omega_0$, $\omega_1$, $\omega_2$ ainsi que le paramètre de forme $\delta$ sont ensuite déterminés. On utilise par exemple un logiciel de simulation et d'estimation tel que le logiciel Matlab.

Les paramètres ainsi déterminés peuvent être utilisés pour générer les incréments $v_i$ qui sont ensuite utilisés pour construire un scénario de soutirage futur d'eau chaude sanitaire en utilisant la relation :

$$t_i = M^{-1}(v_i + M(t_{i-1})).$$

Ci-après, en relation avec la figure 6, un exemple de procédé d'estimation d'une consommation future d'eau chaude sanitaire délivrée par un ballon d'eau chaude selon l'invention. Le procédé peut également être utilisé pour estimer la consommation future d'eau chaude sanitaire délivrée par plusieurs ballons, disposés dans un ou plusieurs foyers.

On munit tout d'abord un ballon d'eau chaude sanitaire d'un dispositif selon l'invention. Le dispositif peut comprendre un capteur de débit d'eau, un module de contrôle de puissance, un module de contrôle et une interface de connexion. Le dispositif peut être placé sur un ballon déjà existant.

On mesure ensuite sur une période suffisamment longue l'historique HIST des soutirages d'un foyer. Cet historique comprend le nombre de soutirages passés sur la période passée, la consommation totale d'eau chaude et la répartition des soutirages passés sur la période passée.

Cet historique HIST est utilisé ensuite pour la génération de scénarii de consommation future d'eau chaude sanitaire. On estime tout d'abord la consommation totale d'eau chaude sur la période passée DWHCT(t).

La consommation totale d'eau chaude aide à définir un modèle stochastique de consommation totale d'eau chaude, en fonction de l'ensemble des consommations totales d'eau chaudes estimées durant chaque séquence de mesure de consommation d'eau chaude sanitaire.

A partir de ce modèle stochastique, on estime la répartition des soutirages passés d'eau chaude Nk(t) sur une période passée, en considérant uniquement la valeur moyenne du nombre de soutirages passés effectués à un instant donné pour le foyer.

On peut alors établir une fonction moyenne Mk(t) représentative de la fréquence moyenne des soutirages sur cette période.

On introduit ensuite chaque heure d'occurrence OCCUR de soutirage $t_1^k$ à $t_m^k$ dans la fonction moyenne pour obtenir un incrément de soutirage moyen $v_i$ entre chaque heure d'occurrence.

Puis, afin de caractériser les durées entre les soutirages, ou entre deux soutirages successifs, on choisit par exemple un modèle de durée MOD DUR. Le modèle de durée peut par exemple être un modèle de type ACD de Weibull, ou exponentiel, un processus de Hawkes ou encore un processus de Poisson inhomogène, ou tout autre processus de durée. Chacun de ces processus est caractérisé par un ou plusieurs paramètres.

Par exemple, pour le modèle ACD de Weibull, les paramètres sont la variable stochastique $v_i$, définies par la loi de probabilité du modèle, le paramètre d'échelle k et le paramètre de forme $\delta$ de la fonction de répartition du modèle.

On détermine ensuite ces paramètres PARA en fonction du modèle choisi et de l'historique HIST.

Par exemple, pour le modèle ACD, on peut utiliser l'estimation « maximum likelihood » afin d'obtenir les paramètres d'autorégression.

En variante, on peut utiliser l'estimateur Lasso pour estimer les paramètres d'un processus de Hawkes. Pour estimer l'intensité du processus de Poisson inhomogène, on utilise par exemple une moyenne du nombre de soutirages sur une période donnée. Toute autre méthode d'estimation peut être utilisée.

Une fois les paramètres des modèles estimés, on peut utiliser l'historique de la période passée pour générer des scénarii de soutirages futurs SCENAR, à partir de la détermination des paramètres PARA, sur une période future en utilisant le modèle.

A l'étape OPTIM, on transmet par exemple les scénarii de soutirages futurs SCENAR à l'extérieur, pour une optimisation future, ou localement pour une optimisation future ou pour une relance de chauffe si les scénarii prévoient de fortes consommations d'eau chaude futures.

Les scénarii ainsi générés peuvent être utilisés comme historique passé, ou peuvent être injectés dans les modèles décrits ci-avant afin d'augmenter le nombre de données connues, et donc affiner les scénarii futurs.

<div align="center">Références :</div>

| | | |
|---|---|---|
| ballon d'eau chaude 1 | module de contrôle 4 | module de contrôle de 20 |
| dispositif 2 | interface de connexion 5 | puissance 6 |
| capteur de débit 3 | | |

**Revendications**

1. Procédé d'estimation d'une consommation future d'eau chaude sanitaire délivrée par au moins un ballon d'eau chaude sanitaire (1) comprenant :

   - une détermination d'un historique des soutirages passés d'eau chaude sanitaire comprenant :

     ◦ un nombre de soutirages passés d'eau chaude sanitaire durant une période passée,
     ◦ une consommation totale d'eau chaude sanitaire durant ladite période passée,
     ◦ une répartition des soutirages passés d'eau chaude sanitaires sur ladite période passée,

   - une estimation d'une durée entre deux soutirages passés d'eau chaude sanitaire à partir d'un modèle de durée choisi, ledit modèle comprenant au moins un paramètre variable,
   - la détermination dudit paramètre en fonction de l'historique, et
   - une génération d'un scénario de soutirages futurs d'eau chaude sanitaire sur une période future, à partir d'une détermination dudit paramètre variable du modèle choisi.

2. Procédé selon la revendication 1, dans lequel la consommation totale d'eau chaude sanitaire comprend l'estimation d'une amplitude pour au moins un soutirage passé d'eau chaude sanitaire.

3. Procédé selon la revendication 2, dans lequel l'amplitude comprend une quantité d'énergie pour chaque soutirage passé d'eau chaude sanitaire.

4. Procédé selon la revendication 3, comprenant en outre pour chaque soutirage passé:

   - au moins une mesure par un capteur de débit (3) d'eau consommée, en sortie du ballon d'eau chaude sanitaire (1),
   - au moins une mesure, par un dispositif de contrôle de puissance (6), d'une puissance électrique injectée dans ledit ballon d'eau chaude sanitaire (1),
   - une détermination, à partir du débit d'eau consommée durant le soutirage passé et de la puissance électrique injectée, d'au moins un profil de température interne du ballon d'eau chaude sanitaire (1) à partir duquel la quantité d'énergie du soutirage passé est déterminée.

5. Procédé selon l'une des revendications 1 à 4, dans lequel la consommation totale d'eau chaude sanitaire est déterminée à partir d'un modèle stochastique.

6. Procédé selon l'une des revendications 1 à 5, dans lequel le scénario comprend l'indication d'une future occurrence d'un soutirage futur d'eau chaude sanitaire, ledit soutirage futur étant au moins **caractérisé par** une amplitude.

7. Procédé selon la revendication l'une des revendications 1 à 6, dans lequel le modèle de durée est un modèle autorégressif conditionnel de Weibull.

8. Dispositif (2) d'estimation d'une consommation future d'eau chaude sanitaire délivrée par au moins un ballon d'eau chaude sanitaire (1), le dispositif (2) comportant un circuit de traitement configuré pour la mise en oeuvre du procédé selon l'une des revendications 1 à 7.

9. Dispositif (2) selon la revendication 8, comprenant en outre au moins un capteur de débit (3) en sortie du ballon d'eau chaude sanitaire (1), ledit capteur de débit (3) étant relié à un module de contrôle (4).

10. Dispositif (2) selon l'une des revendications 8 et 9, comprenant en outre une interface de connexion (5) apte à transmettre le scénario de soutirages futurs d'eau chaude sanitaire.

11. Dispositif (2) selon l'une des revendications 8 à 10, comprenant en outre un module de contrôle de puissance (6), ledit module de contrôle de puissance (6) étant apte à commander l'injection de puissance électrique en fonction du scénario de soutirages futurs d'eau chaude sanitaire.

12. Ballon d'eau chaude sanitaire (1) **caractérisé en ce qu'**il comprend un dispositif (2) selon l'une des revendications 8 à 11.

**13.** Programme informatique **caractérisé en ce qu'**il comporte des instructions pour la mise en oeuvre du procédé selon l'une des revendications 1 à 7, lorsque ce programme est exécuté par un processeur.

FIG. 1

FIG. 2

FIG. 3

FIG. 4

FIG. 5

FIG. 6

Europäisches
Patentamt

European
Patent Office

Office européen
des brevets

## RAPPORT DE RECHERCHE EUROPEENNE

Numéro de la demande

EP 17 18 0555

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WO 2015/121856 A1 (ZEMACH SHAI [IL]) 20 août 2015 (2015-08-20) * page 6, lignes 24-26 * * page 7, ligne 25 - page 8, ligne 3 * * page 9, ligne 31 - page 10, ligne 11 * * page 12, lignes 12-22 * * page 16, ligne 4 - page 17, ligne 27 * * page 19, ligne 3 - page 20, ligne 30 * * page 20, ligne 8 - page 22, ligne 25 * ----- | 1-13 | INV. G06Q50/06 G06Q10/04 |
| X,P | EP 3 182 343 A1 (COMMISSARIAT À L'ÉNERGIE ATOMIQUE ET AUX ÉNERGIES ALTERNATIVES [FR]) 21 juin 2017 (2017-06-21) * alinéas [0039] - [0062] * ----- | 1-7,13 | |

DOMAINES TECHNIQUES RECHERCHES (IPC)

G06Q

Le présent rapport a été établi pour toutes les revendications

| Lieu de la recherche | Date d'achèvement de la recherche | Examinateur |
|---|---|---|
| Munich | 7 août 2017 | Aupiais, Brigitte |

## ANNEXE AU RAPPORT DE RECHERCHE EUROPEENNE
### RELATIF A LA DEMANDE DE BREVET EUROPEEN NO.

EP 17 18 0555

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-08-2017

| Document brevet cité au rapport de recherche | Date de publication | Membre(s) de la famille de brevet(s) | Date de publication |
|---|---|---|---|
| WO 2015121856    A1 | 20-08-2015 | AU     2015216566 A1<br>CA        2937874 A1<br>CN      105917172 A<br>EA       201691415 A1<br>EP        3105512 A1<br>SG 11201606236W A<br>WO     2015121856 A1 | 18-08-2016<br>20-08-2015<br>31-08-2016<br>28-02-2017<br>21-12-2016<br>30-08-2016<br>20-08-2015 |
| EP 3182343      A1 | 21-06-2017 | EP        3182343 A1<br>FR        3045898 A1 | 21-06-2017<br>23-06-2017 |

EPO FORM P0460

Pour tout renseignement concernant cette annexe : voir Journal Officiel de l'Office européen des brevets, No.12/82